# EUROPEAN PATENT SPECIFICATION

(11) **EP 2 186 325 B1**
(45) Date of publication and mention of the grant of the patent: **12.09.2012**
(21) Application number: 08723570.1
(22) Date of filing: 19.03.2008
(51) Int. Cl.: H04N 5/60, H04N 5/445, H04N 5/45, H04N 9/82

(54) **METHOD AND APPARATUS FOR REPRODUCING MULTI-STREAM**
VERFAHREN UND VORRICHTUNG ZUR WIEDERGABE EINES MEHRFACH-STREAMS
PROCÉDÉ ET APPAREIL DE REPRODUCTION DE PLUSIEURS FLUX

(30) Priority: 06.09.2007 KR 20070090577
(43) Date of publication of application: 19.05.2010
(73) Proprietor: Samsung Electronics Co., Ltd., Suwon-si, Gyeonggi-do 442-742 (KR)
(72) Inventor: JUNG, Kil-Soo, Osan-si Gyeonggi-do 447-740 (KR); PARK, Sung-Wook, Mapo-gu Seoul 121-761 (KR)
(74) Representative: Fearnside, Andrew Simon
(86) International application number: PCT/KR2008/001533
(87) International publication number: WO 2009/031741

(56) References cited:
- EP-A2- 1 284 060
- WO-A1-2006/093218
- WO-A2-01/91314
- JP-A- 3 186 076
- US-A- 4 903 129
- US-A- 5 666 555
- US-A1- 2003 189 674
- US-A1- 2005 028 203
- US-A1- 2005 063 675
- US-A1- 2007 031 121
- US-A1- 2007 081 791

## Description

### Technical Field

Aspects of the present invention relate to a method and apparatus for reproducing audio/video data, and more particularly, to a method and apparatus for reproducing simultaneous multi-stream audio/video data.

### Background Art

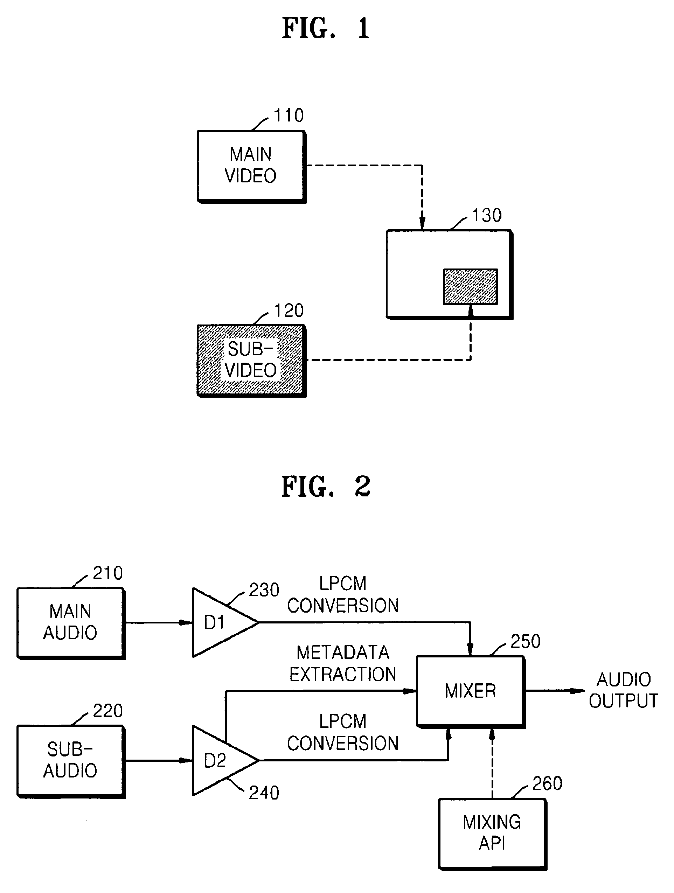

Currently, an audio/video reproducing apparatus reproduces a main audio/video stream simultaneously with multiple sub-audio/video streams (for example a Blu-ray disc (BD) player and a high-definition (HD) digital video disk (DVD) player). FIG. 1 is a block diagram illustrating main video data 110 and sub-video data 120 reproduced on a screen 130 in a picture-in-picture (PIP) mode as one example of simultaneously reproducing multiple audio/video streams. When multiple videos are simultaneously reproduced, a method of processing an audio stream and a subtitle corresponding to each video stream must be considered.

FIG. 2 is a block diagram explaining an audio processing method when a conventional multi-stream reproducing apparatus simultaneously reproduces a main video data and a sub-video data. Referring to FIG. 2, main audio data 210, corresponding to the main video data, is decoded by a main audio decoder 230, converted by linear pulse code modulation (LPCM), and input to a mixer 250. Similarly, sub-audio data 220, corresponding to the sub-video data, is decoded by a sub-audio decoder 240, converted by LPCM, and then input to the mixer 250. The mixer mixes and outputs the decoded main audio data and the sub-audio data by using mixing information and/or mixing application programming interface (API) 260.

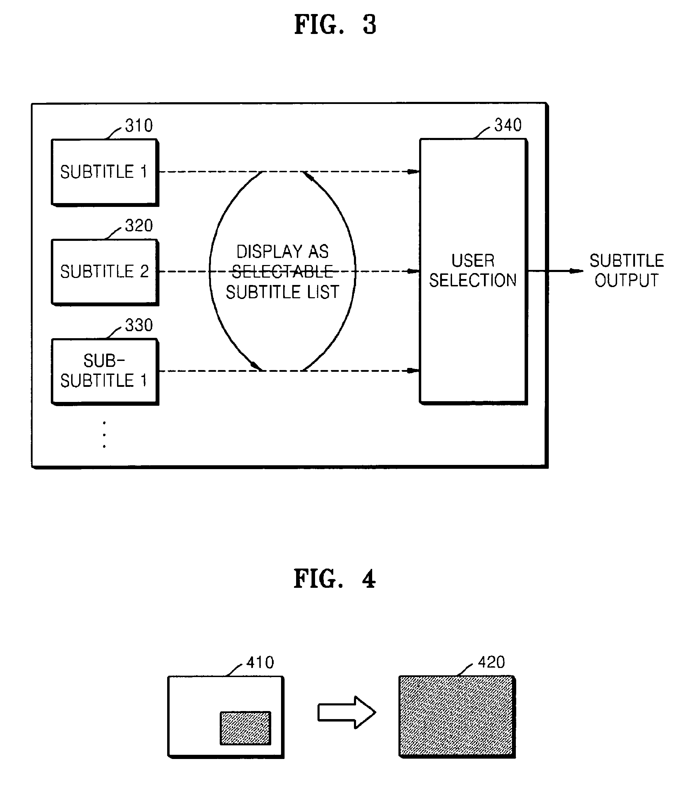

FIG. 3 is a schematic view explaining a subtitle processing method when a conventional multi-stream reproducing apparatus simultaneously reproduces a main video data and a sub-video data. Referring to FIG. 3, sub-video subtitle data 330 is added to main-video subtitle data 310 and 320, and displayed as a selectable subtitle list. If there is a user selection 340 of a subtitle, a selected subtitle is displayed on a screen.

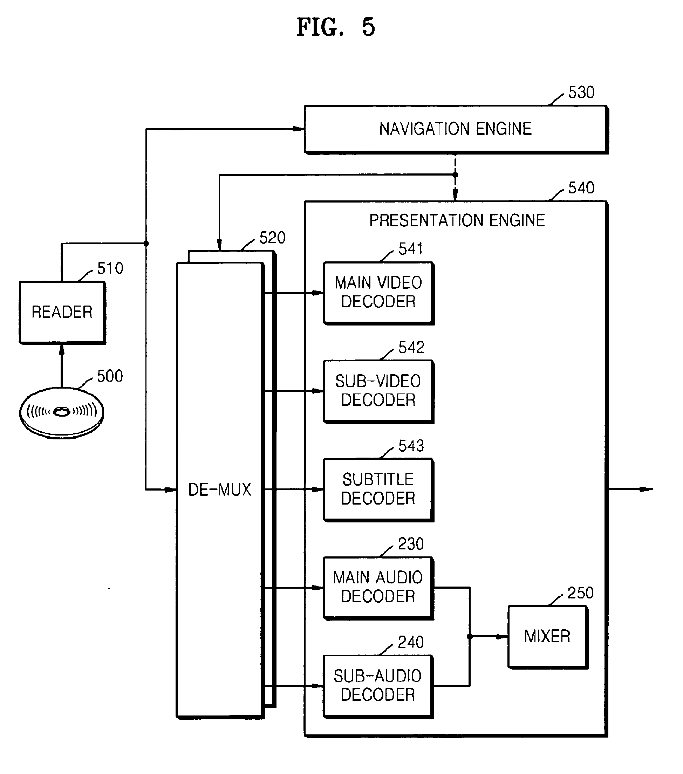

FIG. 5 is a block diagram of an example of a multi-stream reproducing apparatus. Referring to FIG. 5, the multi-stream reproducing apparatus includes a reader 510, a demultiplexer (De-MUX) 520, a navigation engine 530, and a presentation engine 540. The reader 510 reads data from an optical storage medium 500, sends reproducing control information to the navigation engine 530, and sends a multi-stream to the presentation engine 540 through the De-MUX 520. The De-MUX 520 transmits each stream to a corresponding decoder according to stream identification information included in a main audio/video stream and a sub-audio/video stream. Also, the De-MUX 520 may select a stream to be reproduced according to a user input or reproducing control information, and a plurality of De-MUXes may be provided according to a device. The navigation engine 530 controls the presentation engine 540 and the De-MUX 520 according to the reproducing control information and the user input. To decode and reproduce the multi-stream, the presentation engine 540 includes video decoders 541 and 542, audio decoders 230 and 240, and a subtitle decoder 543. Furthermore, the presentation engine includes a mixer 250 to mix audio signals decoded through the audio decoders 230 and 240 according to mixing information. The presentation engine 540 may further include a variety of decoders for decoding and reproducing additional data included in the optical storage medium 500.

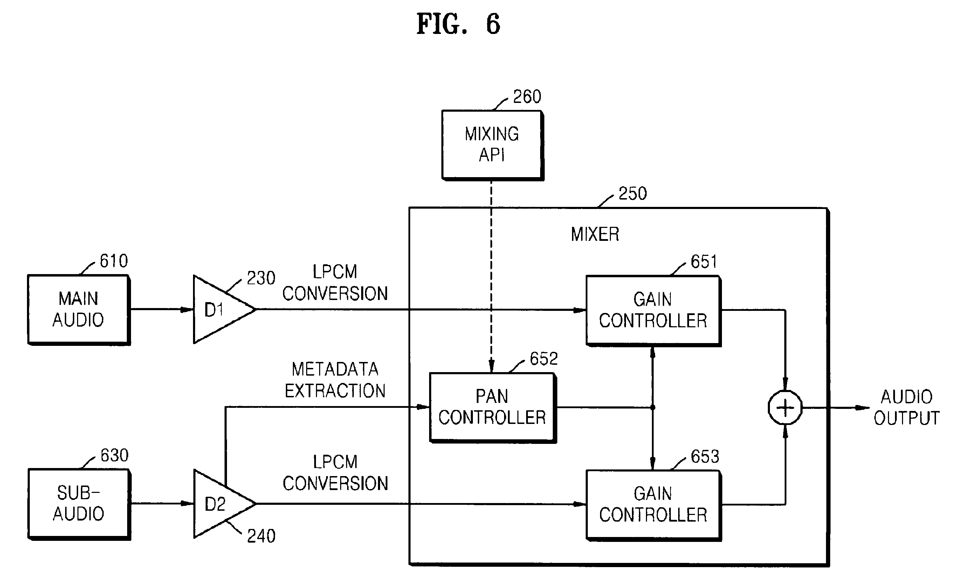

FIG. 6 is a block diagram of a conventional mixer 250. Referring to FIG. 6, the mixer 250 includes gain controllers 651 and 653 and a pan controller 652. The main audio decoder 230 and the sub-audio decoder 240 respectively decode main audio data 610 and sub-audio data 630 encoded in various formats, convert the data 610 and 630 by LPCM, and output the data to the mixer 250. The sub-audio decoder 240 extracts mixing information from metadata included in the sub-audio data 630, and transmits to the pan controller 652. The pan controller 652 is a block to control channel mapping for mixing an audio stream of a plurality of channels. Gain controllers 651 and 653 are blocks to control a volume level of each channel.

When a sub-audio/video stream is reproduced while a main audio/video stream is being reproduced (i.e., when two streams are simultaneously displayed on a screen in a PIP mode), the conventional reproducing apparatus decodes sub-audio data in a sub-audio/video stream, and mixes the main audio data 610 and the sub-audio data 630 by using mixing information in extracted metadata and/or a separate mixing API 260 to reproduce the mixed data. As described above with reference to FIG. 3, the sub-video subtitle 330 is reproduced during an effective period of the sub-audio/video stream by being processed as one of selectable subtitles, together with the main-video subtitles 310 and 320.

FIG. 4 is a view illustrating a sub-video data in the PIP mode 410 of FIG. 1 that is expanded to a full screen 420. In the case of an apparatus capable of simultaneously reproducing a main audio/video stream and a sub-audio/video stream, a user can input a command to expand the sub-video data to a full screen. However, even after the sub-video data is fully displayed on the screen, the apparatus continues to mix and to output a main audio and a sub-audio, and also continues to display a subtitle displayed in the PIP mode. As a result, a user may be confused because the user still hears multiple audio data or views a subtitle for a main video data even if the sub-video data is being fully displayed on the screen. Document US 2003/0189674 A1 discloses a television broadcast receiving apparatus.

### Disclosure of Invention

### Technical Solution

Aspects of the present invention provide a method and apparatus for reproducing multi-stream audio/video data that provides a user with an audio and a subtitle appropriate for a video being displayed on a screen without any separate manipulation of a user by automatically processing audio mixing and a subtitle when a sub-video data is expanded to a full screen.

### Advantageous Effects

According to aspects of the present invention, when a sub-video data is expanded to a full screen, an audio stream and/or a subtitle for only the sub-video data are reproduced, thereby preventing confusion that a user may experience.

### Description of Drawings

These and/or other aspects and advantages of the invention will become apparent and more readily appreciated from the following description of the embodiments, taken in conjunction with the accompanying drawings of which:

FIG. 1 is a block diagram illustrating a main video data and a sub-video data reproduced on a screen in a PIP mode;

FIG. 2 is a block diagram explaining a method of processing an audio stream when a conventional multi-stream reproducing apparatus simultaneously reproduces a main video data and a sub-video data;

FIG. 3 is a schematic view explaining a method of processing a subtitle when a conventional multi-stream reproducing apparatus simultaneously reproduces a main video data and a sub-video data;

FIG. 4 is a view illustrating an example of expanding a sub-video data in the PIP mode of FIG. 1 to a full screen;

FIG. 5 is a block diagram of a multi-stream reproducing apparatus;

FIG. 6 is a block diagram of a conventional mixer;

FIG. 7 is a block diagram of a multi-stream reproducing apparatus for processing main audio data and sub-audio data, according to an embodiment of the present invention;

FIG. 8 is a block diagram of a multi-stream reproducing apparatus for processing main audio data and sub-audio data, according to another embodiment of the present invention;

FIG. 9 is a block diagram of a multi-stream reproducing apparatus for processing a subtitle, according to an embodiment of the present invention;

FIG. 10 is a flowchart of a multi-stream reproducing method of processing an audio stream and a subtitle, according to an embodiment of the present invention; and

FIG. 11 is a flowchart of a method of selecting a sub- video subtitle according to another embodiment of the present invention. Best Mode

According to an aspect of the present invention, there is provided an apparatus to simultaneously reproduce multiple audio/video streams, the apparatus according to claim 1 herein.

The mixer may include one or more switches, wherein when a command to reproduce the sub-video data on the full screen is received, the audio controller may control the switches to prevent the main audio data from being output.

When a command to reproduce the sub-video data on the full screen is received, the audio controller controls the mixer to set a gain of the sub-audio to a maximum value.

When a command to reproduce the sub-video data on the full screen is received, the audio controller may control the mixer to set a gain of the main audio to a minimum value and set a gain of the sub-audio to a maximum value.

The apparatus may further include a navigation engine to control the reproducing of the multiple audio/video streams, wherein the audio controller is included in the navigation engine.

According to another aspect of the present invention, there is provided a method of simultaneously reproducing multiple audio/video streams, according to claim 6.

Additional aspects and/or advantages of the invention will be set forth in part in the description which follows and, in part, will be obvious from the description, or may be learned by practice of the invention. Mode for Invention

Reference will now be made in detail to the present embodiments of the present invention, examples of which are illustrated in the accompanying drawings, wherein like reference numerals refer to the like elements throughout. The embodiments are described below in order to explain the present invention by referring to the figures.

A multi-stream reproducing apparatus, according to an embodiment of the present invention, includes a navigation engine, a presentation engine, and/or an audio mixer that are improved as compared to those of a conventional reproducing apparatus. Therefore, such improved components of the multi-stream reproducing apparatus will be mainly described.

A reproducing apparatus according to an embodiment of the present invention includes a navigation engine to control reproduction of multiple audio- video streams, and a mixer to reproduce only sub-audio data without reproducing main audio data under the control of the navigation engine when a sub-video data is expanded to a full screen. Accordingly, a user is prevented from hearing the main audio data while viewing only the sub-video data. Furthermore, when the sub-video data is expanded to a full screen while multi-stream audio/video data including subtitle data is being reproduced, the navigation engine controls the reproducing apparatus so as to reproduce only a sub-video subtitle without reproducing a main-video subtitle. Accordingly, confusions that may be caused by a wrong subtitle are prevented.

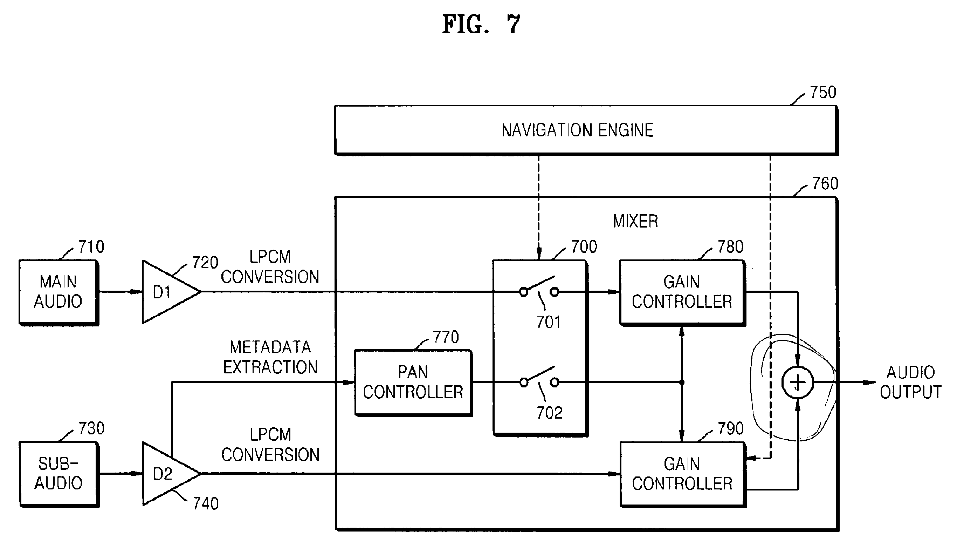

FIG. 7 is a block diagram of a multi-stream reproducing apparatus for processing main audio data and sub- audio data, according to an embodiment of the present invention. Referring to FIG. 7, the multi-stream reproducing apparatus includes a navigation engine 750 to control reproduction of multiple audio/video streams, and a presentation engine (not shown) including an audio mixer 760 and decoders for reproducing multi-stream audio/video data. Main audio data 710 is decoded through a main audio decoder 720 in the presentation engine, and sub-audio data 730 is decoded through a sub-audio decoder 740 in the presentation engine. The main audio data 710 and the sub-audio data 730 are then output to the audio mixer 760. The audio mixer 760 includes a switch unit 700 controlled by an audio controller (not shown). In an implementation example of the audio controller shown in FIG. 7, the navigation engine 750 also functions as the audio controller. The switch unit 700 includes a first switch 701 located at an output terminal of the main audio decoder 720, and a second switch 702 located at an output terminal of mixing information.

When the navigation engine 750 receives user input for full-screen reproduction of the sub-video data (i.e., when the sub-video data is expanded to a full screen), the navigation engine 750 controls the switch unit 700 such that the first and second switches 701 and 702 are switched OFF to thereby block output of the main audio data 710. Also, the navigation engine 750 controls a gain controller 790 of the sub-audio data 730 to set a volume level of a sub-audio signal to a maximum level, so that only the sub-audio signal is reproduced as a final audio output. However, it is understood that according to other aspects, the volume level of the sub-audio signal is controlled by a user or is set to a default level different from a maximum level.

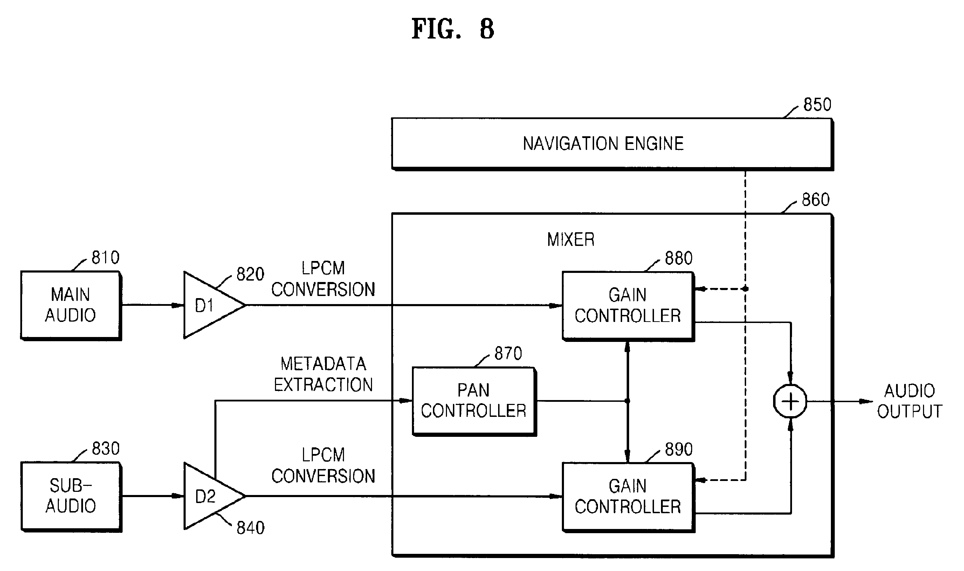

FIG. 8 is a block diagram of a multi-stream reproducing apparatus for processing main audio data and sub-audio data, according to another embodiment of the present invention. Referring to FIG. 8, main audio data 810 is decoded through a main audio decoder 820 in a presentation engine (not shown), and sub-audio data 830 is decoded through a sub-audio decoder 840 in the presentation engine. The main audio data 810 and the sub-audio data 830 are then output to an audio mixer 860. The audio mixer 860 includes gain controllers 880 and 890 that are controlled by an audio controller (not shown). In FIG. 8, the navigation engine 850 also functions as the audio controller as an implementation example of the audio controller for controlling the gain controllers 880 and 890.

The navigation engine 850 controls each of the gain controllers 880 and 890 (i.e., a gain controller 880 for a main audio signal, and a gain controller 890 for a sub-audio signal). Specifically, when the navigation engine 850 receives a command to reproduce sub-video data on a full screen, the navigation engine 850 controls the gain controllers 880 and 890 in the mixer 860 so as to set a gain of the main audio data 810 to a minimum value (0), and set a gain of the sub-audio data 830 to a maximum value. Consequently, only the sub-audio data 830 is reproduced as a final audio output.

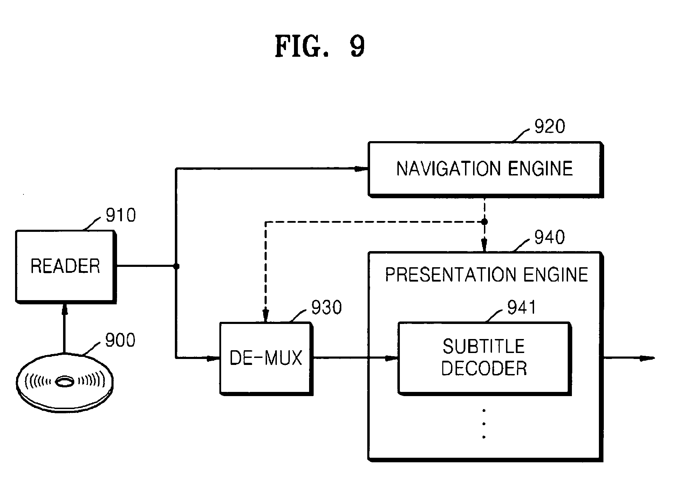

FIG. 9 is a block diagram of a multi-stream reproducing apparatus for processing a subtitle, according to an embodiment of the present invention. Referring to FIG. 9, the multi-stream reproducing apparatus includes a reader 910, a navigation engine 920, a de-multiplexer (De-MUX) 930, and a presentation engine 940. Like in a conventional multi-stream reproducing apparatus, multi-stream audio/video data recorded on an optical storage medium 900 is read by the reader 910, and is transmitted to the navigation engine 920 that controls reproduction of an audio/video stream, and to the De-MUX 930 that selects a stream to be reproduced from among multiple audio/video streams. However, when receiving a command to reproduce a sub-video data on a full screen, the navigation engine 920 controls the De-MUX 930 to select a subtitle for the sub-video data. Specifically, when the navigation engine 920 determines that a subtitle stream for a main video data is still being reproduced with reference to a subtitle, which was reproduced before the conversion to the full screen, the navigation engine 920 controls the De-MUX 930 to select the subtitle for the sub-video data to be displayed on the full screen. Then, the subtitle for the sub-video data is decoded through a subtitle decoder 941 in the presentation engine 940 so that the subtitle for the sub-video data is reproduced.

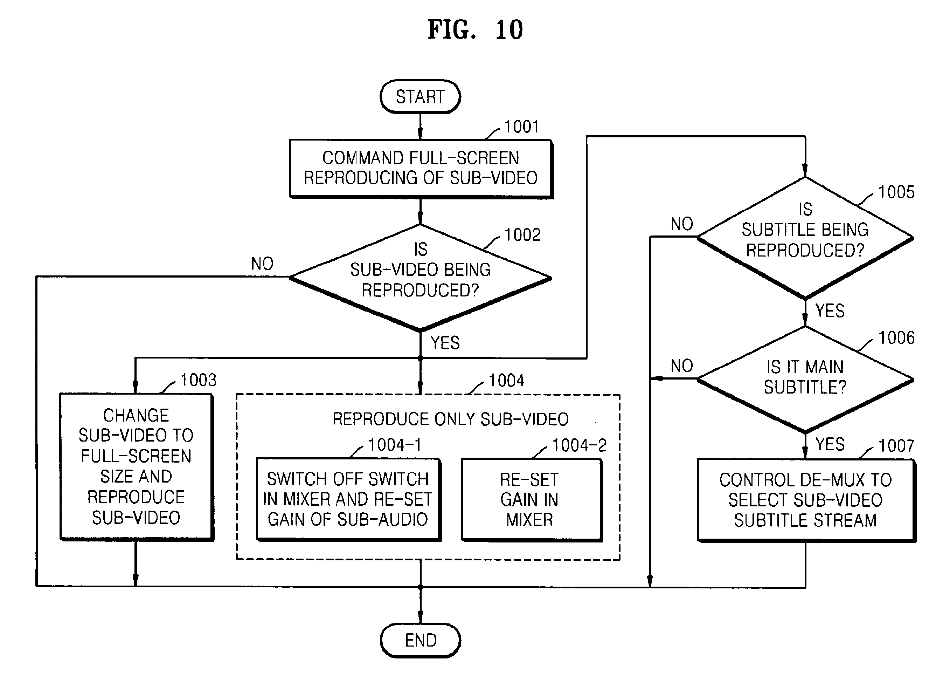

FIG. 10 is a flowchart of a multi-stream reproducing method for processing audio data and a subtitle, according to an embodiment of the present invention. Referring to FIG. 10, when a command to reproduce a sub-video data on a full screen is received in operation 1001, it is determined whether the sub-video data is being reproduced in operation 1002. If it is determined that the sub-video data is being reproduced (operation 1002), a size of the sub-video data is changed to a full screen size the sub-video data is reproduced accordingly in operation 1003. If audio output control is required, only a sub-audio is reproduced without reproducing a main audio in operation 1004. To this end, switches that are included at output terminals of mixing information and a main audio decoder in a mixer are switched OFF to block the output of main audio data. In this case, the mixer may be controlled to set a gain of the sub-audio data to a maximum level in operation 1004-1. Alternatively, as another method of outputting only the sub-audio data, the mixer may be controlled to set a gain of the main audio to a minimum level, and to set a gain of the sub-audio to a maximum level in operation 1004-2. In the case of an embodiment in which a sub-video subtitle for the sub-video data being reproduced on the full screen is to be reproduced without reproducing a main-video subtitle, it is determined first whether a subtitle is being reproduced in operation 1005. If it is determined that the subtitle is being reproduced (operation 1005), it is determined whether a main-video subtitle is being reproduced in operation 1006. If it is determined that the main-video subtitle is being reproduced (operation 1006), a De-MUX is controlled to select the sub-video subtitle stream rather than the main-video subtitle in operation 1007.

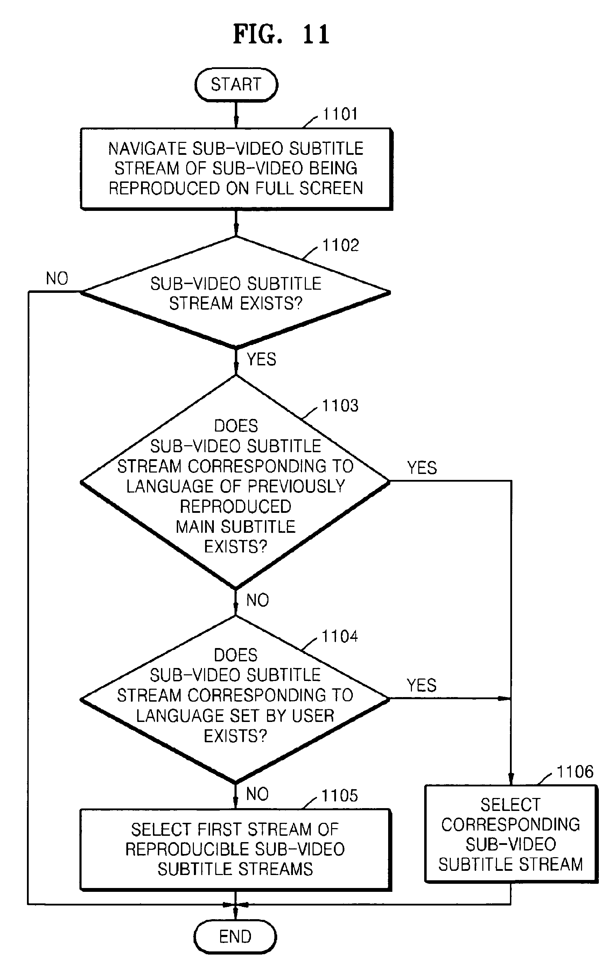

FIG. 11 is a flowchart of a method of selecting a subtitle for a sub-video data, according to another embodiment of the present invention. Referring to FIGs. 9 and 11, when a sub-video data is reproduced on a full screen, a navigation engine 920 determines whether a sub-video subtitle stream for the corresponding sub-video data exists in operation 1101. If the sub-video subtitle stream for the sub-video data being reproduced on the full screen exists in operation 1102, if there is one subtitle stream, the subtitle stream is selected and reproduced. If there is a plurality of subtitle streams, one of the subtitle streams is selected and reproduced in operations 1103 to 1106. The priority in selecting a subtitle is as follows, although aspects of the present invention are not limited thereto. If a sub-video subtitle, corresponding to language information of a main-video subtitle that was reproduced before the sub-video data was expanded to a full screen, exists from among a plurality of sub-video subtitles in operation 1103 (i.e., if there is a sub-video subtitle of the same language as that of the main-video subtitle), the corresponding sub-video subtitle is selected and reproduced in operation 1106. That is, the sub-video subtitle of the same language as that of the previously reproduced subtitle is output. If a sub-video subtitle stream of the same language as that of the previously reproduced main-video subtitle does not exist (operation 1103), a user determines whether a sub-video subtitle stream of a language set in a reproducing apparatus exists in operation 1104. If the sub-video subtitle stream does not exist (operation 1104), the first one of reproducible sub-video subtitle streams is selected in operation 1105. The navigation engine 920 controls the De-MUX 930 to select the subtitle stream selected in the aforementioned manner and sends the subtitle stream to the subtitle decoder 941 of the presentation engine 940.

It is understood that aspects of the present invention are not limited to audio/video data reproduced from an optical storage medium. That is, the audio/video data may be streamed to the reproducing apparatus from other sources, such as wirelessly through a network or satellite transmission, or through a coaxial cable.

Aspects of the present invention can also be embodied as computer-readable codes on a computer-readable recording medium. Also, codes and code segments to accomplish the present invention can be easily construed by programmers skilled in the art to which the present invention pertains. The computer-readable recording medium is any data storage device that can store data which can be thereafter read by a computer system or computer code processing apparatus. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion.

Although a few embodiments of the present invention have been shown and described, it would be appreciated by those skilled in the art that changes may be made in this embodiment without departing from the invention, the scope of which is defined in the claims

## Claims

1. An apparatus to simultaneously reproduce multiple audio/video streams, the apparatus **characterised by** comprising:
a nain audio decoder and a sub-audio decoder arranged to decode encoded main audio data and encoded sub-audio data, respectively;
wherein the sub-audio decoder is arranged to extract mixing information from metadata included in the sub-audio data;
a mixer (760) a mixer arranged to receive the main audio data from the main audio decoder, and the sub-audio data and the extracted mixing information from the subs-audio decoder to mix and to output main audio data and sub-audio data; and
the mixer comprising a pan controller to receive said extrated mixing information and to control mapping for mixing the main audio data and the sub-audio data using the extracted mixing information
an audio controller to control the mixer such that when a sub-video data is expanded to a full screen, the sub-audio data is reproduced and the main audio data is not reproduced and to control the mixer to set a gain of the sub-audio data to a maximum value when a command to reproduce the sub-video data on the full screen is received.

2. The apparatus as claimed in claim 1, wherein:
the mixer comprises a main audio switch (701) provided at an output terminal of the main audio data; and
the audio controller controls the main audio switch to prevent the main audio data from being output when a command to reproduce the sub-video data on the full screen is received.

3. The apparatus as claimed in claim 1, wherein:
the mixer comprises switches (700) provided at output terminals of a main audio decoder and mixing information; and
the audio controller controls the switches to prevent the main audio data (710) from being output when a command to reproduce the sub-video data on the full screen is received.

4. The apparatus as claimed in claim 1, wherein the audio controller controls the mixer to set a gain of the main audio data to a minimum value when a command to reproduce the sub-video data on the full screen is received.

5. The apparatus as claimed in claim 1, further comprising a navigation engine (750) to control a reproduction of the multiple audio/video streams,
wherein the navigation engine comprises the audio controller, and controls the apparatus to reproduce a sub-video subtitle and to not reproduce a main video subtitle when a command to reproduce the sub-video data on the full screen is received.

6. A method of simultaneously reproducing multiple audio/video streams, the method comprising:
decoding endoded main audio data and encoded subs-audio data, and extracting mixing information from metadata in the subs-audio data;
receiving at a mixer the decoded main audio data, and receiving at the miwer the decoded sub-audio data and the extracted mixing information
reproducing a main video data and a sub-video data from the multiple audio/video streams; and **characterised by** comprising:
receiving at a pan controller of a mixer said extracted information and controlling channel mapping for mixing the main audio data and the subs-audio data using the extracted mixing information
controlling the mixer to reproduce sub-audio data and to not reproduce main audio data if the sub-video data is expanded to a full screen and to set a gain of the sub-audio data to a maximum value when a command to reproduce the sub-video data on the full screen is received.

7. The method as claimed in claim 6, wherein the controlling of the mixer comprises controlling a main audio switch, provided at an output terminal of the main audio data, to prevent the main audio data from being output when a command to reproduce the sub-video data on the full screen is received.

8. The method as claimed in claim 6, wherein the controlling of the mixer comprises controlling switches provided at output terminals of a main audio decoder and mixing information to prevent the main audio data from being output when a command to reproduce the sub-video data on the full screen is received.

9. The method as claimed in claim 6, wherein the controlling of the mixer comprises controlling the mixer to set a gain of the main audio data to a minimum value when a command to reproduce the sub-video data on the full screen is received.

10. The method as claimed in claim 6, further comprising reproducing a sub-video subtitle and not reproducing a main video subtitle when a command to reproduce the sub-video data on the full screen is received.

11. A computer readable recording medium having embodied thereon a computer program for executing a method of simultaneously reproducing multiple audio/video streams, the method having the steps as set forth in any of claims 6 to 10.

## Patentansprüche

1. Vorrichtung zur gleichzeitigen Wiedergabe mehrerer Audio/Video-Streams, wobei die Vorrichtung **dadurch gekennzeichnet ist, dass** sie Folgendes aufweist:
einen Hauptaudiodecodierer und einen Unteraudiodecodierer, die angeordnet sind, um codierte Hauptaudiodaten beziehungsweise codierte Unteraudiodaten zu decodieren;
wobei der Unteraudiodecodierer angeordnet ist, um Mischinformationen von Metadaten zu extrahieren, die in den Unteraudiodaten enthalten sind;
einen Mischer (760), der angeordnet ist, um die Hauptaudiodaten von dem Hauptaudiodecodierer und die Unteraudiodaten und die extrahierten Mischinformationen von dem Unteraudiodecodierer zu empfangen, um Hauptaudiodaten und Unteraudiodaten zu mischen und auszugeben; und
wobei der Mischer einen Pan-Controller zum Empfangen der extrahierten Mischinformationen und zum Steuern des Kanal-Mappings zum Mischen der Hauptaudiodaten und der Unteraudiodaten unter Verwendung der extrahierten Mischinformationen aufweist;
einen Audio-Controller zum Steuern des Mischers, derart, da s s die Unteraudiodaten wiedergegeben werden und die Hauptaudiodaten nicht wiedergegeben werden, wenn Untervideodaten auf einen Vollbildschirm erweitert werden, und zum Steuern des Mischers zum Einstellen einer Verstärkung der Unteraudiodaten auf einen Höchstwert, wenn ein Befehl zum Wiedergeben der Untervideodaten auf dem Vollbildschirm empfangen wird.

2. Vorrichtung nach Anspruch 1, wobei:
der Mischer einen Hauptaudioschalter (701) aufweist, de r an einem Ausgabeanschluss der Hauptaudiodaten bereitgestellt ist; und
d e r Audio-Controller de n Hauptaudioschalter steuert, um zu verhindern, dass die Hauptaudiodaten ausgegeben werden, wenn ein Befehl zum Wiedergeben der Untervideodaten auf dem Vollbildschirm empfangen wird.

3. Vorrichtung nach Anspruch 1, wobei:
der Mischer Schalter (700), die an Ausgabeanschlüssen eines Hauptaudiodecodierers bereitgestellt sind, und Mischinformationen aufweist; und
der Audio-Controller die Schalter steuert, um zu verhindern, dass die Hauptaudiodaten (710) ausgegeben werden, wenn ein Befehl zum Wiedergeben der Untervideodaten au f dem Vollbildschirm empfangen wird.

4. Vorrichtung nach Anspruch 1, wobei der Audio-Controller den Mischer steuert, um eine Verstärkung der Hauptaudiodaten auf einen Mindestwert einzustellen, wenn ein Befehl zum Wiedergeben der Untervideodaten auf dem Vollbildschirm empfangen wird.

5. Vorrichtung nach Anspruch 1, die ferner eine Navigationsengine (750) zum Steuern einer Wiedergabe der mehreren Audio/Video-Streams aufweist,
wobei die Navigationsengine den Audio-Controller aufweist und die Vorrichtung steuert, um einen Untervideo-Untertitel wiederzugeben und einen Hauptvideo-Untertitel nicht wiederzugeben, wenn ein Befehl zum Wiedergeben der Untervideodaten auf dem Vollbildschirm empfangen wird.

6. Verfahren zum gleichzeitigen Wiedergeben mehrerer Audio/Video-Streams, wobei das Verfahren Folgendes aufweist:
Decodieren codierter Hauptaudiodaten und codierter Unteraudiodaten und Extrahieren von Mischinformationen von Metadaten, die in den Unteraudiodaten enthalten sind;
Empfangen der decodierten Hauptaudiodaten an einem Mischer und Empfangen der decodierten Unteraudiodaten und der extrahierten Mischinformationen an dem Mischer;
Wiedergeben von Hauptvideodaten und Untervideodaten von den mehreren Audio/Video-Streams; und **dadurch gekennzeichnet, dass** es Folgendes aufweist:
Empfangen der extrahierten Informationen an einem Pan-Controller eines Mischers und Steuern des Kanal-Mappings zum Mischen der Hauptaudiodaten und der Unteraudiodaten unter Verwendung der extrahierten Mischinformationen;
Steuern des Mischers, um Unteraudiodaten wiederzugeben un d Hauptaudiodaten nicht wiederzugeben, wenn die Untervideodaten auf einen Vollbildschirm erweitert werden, und um eine Verstärkung der Unteraudiodaten auf einen Höchstwert einzustellen, wenn ein Befehl zum Wiedergeben der Untervideodaten auf dem Vollbildschirm empfangen wird.

7. Verfahren nach Anspruch 6, wobei das Steuern des Mischers das Steuern eines Hauptaudioschalters aufweist, de r an einem Ausgabeanschluss der Hauptaudiodaten bereitgestellt ist, um zu verhindern, dass die Hauptaudiodaten ausgegeben werden, wenn ein Befehl zum Wiedergeben der Untervideodaten auf dem Vollbildschirm empfangen wird.

8. Verfahren nach Anspruch 6, wobei das Steuern des Mischers das Steuern von Schaltern, die an Ausgabeanschlüssen eines Hauptaudiodecodierers bereitgestellt sind, und das Mischen von Informationen aufweist, um zu verhindern, dass die Hauptaudiodaten ausgegeben werden, wenn ein Befehl zum Wiedergeben der Untervideodaten auf dem Vollbildschirm empfangen wird.

9. Verfahren nach Anspruch 6, wobei das Steuern des Mischers das Steuern des Mischers zum Einstellen einer Verstärkung der Hauptaudiodaten auf einen Mindestwert aufweist, wenn ein Befehl zum Wiedergeben der Untervideodaten auf dem Vollbildschirm empfangen wird.

10. Verfahren nach Anspruch 6, das ferner das Wiedergeben eines Untervideo-Untertitels und das Nichtwiedergeben eines Hauptvideo-Untertitels aufweist, wenn ein Befehl zum Wiedergeben der Untervideodaten auf dem Vollbildschirm empfangen wird.

11. Maschinenlesbarer Datenträger, der darauf ein Computerprogramm zum Ausführen eines Verfahrens zum gleichzeitigen Wiedergeben mehrerer Audio/Video-Streams enthält, wobei das Verfahren die Schritte nach einem der Ansprüche 6 bis 10 aufweist.

## Revendications

1. Appareil pour reproduire simultanément plusieurs flux audio/vidéo, l'appareil étant **caractérisé en ce qu'**il comprend :
un décodeur audio principal et un décodeur infrasonore conçus pour décoder respectivement des données audio principales codées et des données infrasonores codées ;
où le décodeur infrasonore est conçu pour extraire des informations de mixage de métadonnées comprises dans les données infrasonores ;
un mélangeur (760) conçu pour recevoir les données audio principales du décodeur audio principal, et les données infrasonores et les informations de mixage extraites du décodeur infrasonore pour mélanger et délivrer en sortie des données audio principales et des données infrasonores ; et
le mélangeur comprenant un contrôleur PAN pour recevoir lesdites informations de mixage extraites et pour contrôler le mappage de canaux pour mélanger les données audio principales et les données infrasonores à l'aide des informations de mixage extraites ;
un contrôleur audio pour contrôler le mélangeur de manière à ce que lorsque des données infra-vidéo sont développées en plein écran, les données infrasonores sont reproduites et les données audio principales ne sont pas reproduites, et pour contrôler le mélangeur pour définir un gain des données infrasonores à une valeur maximale lorsqu'une commande pour reproduire les données infra-vidéo en plein écran est reçue.

2. Appareil tel que revendiqué dans la revendication 1, dans lequel :
le mélangeur comprend un commutateur audio principal (701) pourvu au niveau d'une borne de sortie des données audio principales ; et
le contrôleur audio contrôle le commutateur audio principal pour empêcher les données audio principales d'être délivrées en sortie lorsqu'une commande pour reproduire les données infra-vidéo en plein écran est reçue.

3. Appareil tel que revendiqué dans la revendication 1, dans lequel :
le mélangeur comprend des commutateurs (700) pourvus au niveau des bornes de sortie d'un décodeur audio principal et des informations de mixage ; et
le contrôleur audio contrôle les commutateurs pour empêcher les données audio principales (710) d'être délivrées en sortie lorsqu'une commande pour reproduire les données infra-vidéo en plein écran est reçue.

4. Appareil tel que revendiqué dans la revendication 1, dans lequel le contrôleur audio contrôle le mélangeur pour définir un gain des données audio principales à une valeur minimale lorsqu'une commande pour reproduire les données infra-vidéo en plein écran est reçue.

5. Appareil tel que revendiqué dans la revendication 1, comprenant en outre un moteur de navigation (750) pour contrôler la reproduction des multiples flux audio/vidéo,
dans lequel le moteur de navigation comprend le contrôleur audio, et contrôle l'appareil pour reproduire un sous-titre infra-vidéo et ne pas reproduire un sous-titre vidéo principal lorsqu'une commande pour reproduire les données infra-vidéo en plein écran est reçue.

6. Procédé de reproduction simultanée de plusieurs flux audio/vidéo, le procédé comprenant les étapes consistant à :
décoder des données audio principales codées et des données infrasonores codées, et extraire des informations de mixage des métadonnées contenues dans les données infrasonores ;
recevoir au niveau d'un mélangeur les données audio principales décodées, et recevoir au niveau du mélangeur les données infrasonores décodées et les informations de mixage extraites ;
reproduire des données vidéo principales et des données infra-vidéo à partir des multiples flux audio/vidéo ; et **caractérisé en ce qu'**il comprend les étapes consistant à :
recevoir au niveau d'un contrôleur PAN d'un mélangeur lesdites informations extraites et contrôler le mappage de canaux pour mélanger les données audio principales et les données infrasonores à l'aide des informations de mixage extraites ;
contrôler le mélangeur pour reproduire les données infrasonores et ne pas reproduire les données audio principales si les données infra-vidéo sont développées en plein écran et pour définir un gain des données infrasonores à une valeur maximale lorsqu'une commande pour reproduire les données infra-vidéo en plein écran est reçue.

7. Procédé tel que revendiqué dans la revendication 6, dans lequel le contrôle du mélangeur consiste à contrôler un commutateur audio principal pourvu au niveau d'une borne de sortie des données audio principales pour empêcher les données audio principales d'être délivrées en sortie lorsqu'une commande pour reproduire les données infra-vidéo en plein écran est reçue.

8. Procédé tel que revendiqué dans la revendication 6, dans lequel le contrôle du mélangeur consiste à contrôler des commutateurs pourvus au niveau des bornes de sortie d'un décodeur audio principal et des informations de mixage pour empêcher les données audio principales d'être délivrées en sortie lorsqu'une commande pour reproduire les données infra-vidéo en plein écran est reçue.

9. Procédé tel que revendiqué dans la revendication 6, dans lequel le contrôle du mélangeur consiste à contrôler le mélangeur pour définir un gain des données audio principales à une valeur minimale lorsqu'une commande pour reproduire les données infra-vidéo en plein écran est reçue.

10. Procédé tel que revendiqué dans la revendication 6, consistant en outre à reproduire un sous-titre infra-vidéo et à ne pas reproduire un sous-titre vidéo principal lorsqu'une commande pour reproduire les données infra-vidéo en plein écran est reçue.

11. Support d'enregistrement lisible par un ordinateur comprenant un programme informatique pour exécuter un procédé de reproduction simultanée de plusieurs flux audio/vidéo, le procédé comprenant les étapes telles que définies dans l'une quelconque des revendications 6 à 10.
